Europäisches Patentamt

(19) European Patent Office

Office européen des brevets

(11) Publication number: 0 117 079 A1

## (12) EUROPEAN PATENT APPLICATION

(21) Application number: 84300563.8

(22) Date of filing: 30.01.84

(51) Int. Cl.³: F 16 B 15/00

(30) Priority: 17.02.83 GB 8304460

(43) Date of publication of application:
29.08.84 Bulletin 84/35

(84) Designated Contracting States:
AT BE CH DE FR GB IT LI LU NL SE

(71) Applicant: Kitson, Michael James
"Kimberley" Sway Road
Brockenhurst, Hants S04 7RX(GB)

(72) Inventor: Kitson, Michael James
"Kimberley" Sway Road
Brockenhurst, Hants S04 7RX(GB)

(74) Representative: Carpmael, John William Maurice et al,
CARPMAELS & RANSFORD 43 Bloomsbury Square
London, WC1A 2RA(GB)

(54) Tension staple.

(57) According to the present application, there is provided a tension staple (1) having a generally U-shaped portion (3), the end of each arm (7) of the U-shaped portion being pointed, and a tongue portion (5) extending from the base of the U-shaped portion away from the arms thereof, preferably the length of the arms of the U-shaped portion being no more than twice the length of the tongue portion.

Preferably, the tension staple comprises a generally rectangular member having the U-shaped portion formed in one shorter side thereof and advantageously having the other shorter side rounded off.

Fig.1.

## TENSION STAPLE

The present invention relates to a tension staple for attaching fencing wire to a fence post and tensioning the wire.

At present a wire fence is erected by fixing fencing posts at spaced intervals along the line on which the fence is to be erected. A length of fencing wire is attached to the post at one end of the line and stretched out to the far end of the line. The wire is attached to each of the intermediate posts so that it is generally parallel to the ground. A number of further lengths of wire may be attached to the posts so that they run generally parallel to the first length of wire and are spaced from one another by a predetermined distance.

In order to prevent the lengths of wire from sagging and to ensure that it is not possible to pass through the fence by pulling an adjacent pair of lengths away from one another, it is common practice to place each length under tension.

Generally each length is tensioned by a tensioning device positioned at one or each end thereof. Where the fence is long, it may be necessary to locate one or more tensioning devices intermediate the ends of the fence. A typical tensioning device comprises an eye bolt having the length of wire attached to the eye. The bolt passes through a hole in an abutment fixed to a post and screws into a nut positioned on the side of the hole remote from the eye. The length of wire is tensioned by screwing the nut towards the eye of the bolt.

The tensioning devices presently used are generally multi-component articles and require the use of special connections or posts to attach them in the fence.

Where the fence posts are wooden, each length of wire is generally attached thereto intermediate the tensioning devices by the use of wire staples comprising,

-2-

for instance a piece of wire sharpened at both its ends and bent into a U-shape.

It is an object of the present invention to provide a tension staple for attaching a length of fencing wire to a wooden fencing post and at the same time tensioning the wire.

According to a first aspect of the present invention, there is provided a tension staple having:

a generally U-shaped portion, for receiving a wire to be tensioned, the end of each arm of the U-shaped portion being pointed, and

a tongue portion extending from the base of the U-shaped portion away from the arms thereof, for insertion into a post with the wire received in the U-shaped portion thereby to draw a portion of the wire into the post whereby the wire is tensioned.

Preferably, the length of the arms of the U-shaped portion is no more than twice the length of the tongue portion.

According to a second aspect of the present invention there is provided a method of tensioning a wire, for use in erecting a wire fence, which comprises locating the wire in a tension staple having a generally U-shaped portion, the end of each arm of the U-shaped portion being pointed, and a tongue portion extending from the base of the U-shaped portion away from the arms thereof, with the wire received in the U-shaped portion, and driving the tension staple into a post arms-first so that at least a portion of the tongue enters the post thereby drawing a portion of the wire into the post, whereby the wire is tensioned.

Preferably, the tension staple comprises a generally rectangular member having the U-shaped portion formed in one shorter side thereof and advantagously, having the other shorter side rounded off. Conveniently, the rectangular member is about 5 cm long by 2 cm wide by 0.2 cm thick, although the size of the tension staple will vary to suit the use to which it is put.

Alternatively, the tension staple may be shaped like a two-pronged fork, and conveniently the end of the tongue portion remote from the U-shaped portion has an enlarged head.

Preferably, the tongue portion is at least as long as the arms of the U-shaped portion, and advantageously between twice or three times that length.

The base of the U-shaped portion may be curved or may be rectilinear.

Preferably, the surface of the base portion remote from the tongue portion has a sharpened edge and a hole is provided immediately adjacent the edge for receiving a length of wire. The hole may be located slightly away from the edge so that it is closed around its perimeter. However, preferably the hole intersects the edge and is therefore open at its perimeter when it intersects the edge. Advantageously the hole is located in the middle of the edge.

Conveniently the longitudinal edges of the tongue portion and, if desired, the outside edges of the arms are serrated to improve the grip of the tension staple in a post.

Conveniently there is a second hole in the end of the tongue portion remote from the U-shaped portion for receiving a removal tool.

Preferably, the tension staple has markings on its tongue portion for indicating, in use, the depth the tension staple has been driven into a fence post. The markings may be in a suitable measurement of length, for instance centimeters, or in an arbitrary measurement indicative of tension in a wire.

Preferably, the tension staple is made from a tough metal such as steel, iron, or brass. Conveniently the steel is stainless or the iron is galvanised to give the tension staple protection against corrosion.

Conveniently, the tension staple is made in a one stage metal-working operation, such as pressing or casting.

It is envisaged that the tension staple of the present invention will find particular, but not exclusive use in erecting wire fences, although it could also be used in stapling any sort of wire or similar material in position where it is desired that the wire should be held under tension.

The tension staple will be used in the following manner in the erection of a wire fence. A number of wooden fencing posts are fixed in the ground at spaced intervals along the line on which the fence is to be erected. A length of wire is fixed to the fence post at one end of the line, for instance by wrapping one end of the length around the post and stapling the free end thereof to the post using an ordinary fencing staple.

The length is then loosely attached to the remaining posts. At the majority of the posts, ordinary fencing staples are used, but at a minority of the posts, for instance every fourth or fifth post, a tension staple according to the present invention is used.

Where such a tension staple is used it may be necessary to thread the length of wire through the hole adjacent the base of the U-shaped portion before the length is attached to the next adjacent post.

The length is then attached to the other end post in a similar manner to the manner in which it is attached to the first end post. The length is manually pulled as tight as possible. However, it is likely that the length of wire will still sag intermediate the posts.

Once the length is firmly secured at either end of the fence line, it is tensioned by use of the tension staple. The tension staple is firstly driven in until the wire abuts tightly the post. This is the normal position for a wire staple. However, thereafter the tension staple is driven further into the post so that the tongue portion enters the post, thereby pulling with it the wire and thus tensioning the wire.

Preferably, each tension staple along the fence line is driven in an equal distance so that the tension is substantially uniform along the length of wire. The markings on the tongue portion of the tension staple may assist in ensuring that each tension staple is driven in the same distance.

Thereafter, the length of wire is firmly attached to the other fence posts by driving in the normal staples. Further lengths of wire may be attached to the posts in similar fashion to provide a complete fence.

The provision of a sharpened edge and a wire receiving hole is not necessary where the wire does not need to be greatly tensioned. However, it is preferable that these features are present, both to facilitate insertion of the tension staple and to ensure that the wire does not break when it is to be tensioned a large amount.

The tension staple of the invention, especially where a tool receiving hole is provided, can be readily removed from a fence post and reused.

Thus the present invention provides a tension staple which is easy and cheap to produce, can be readily used and re-used in erecting wire fences, and whose use avoids the need to provide more complex and expensive tensioning devices in such a fence.

The tension staple of the present invention may be used with single strand, multistrand or barbed lengths of fencing wire.

Two embodiments of a tension staple according to the present invention are now described, by way of example only, with reference to the accompanying drawings, in which:

Figure 1 shows a plan view of the first tension staple of the invention;

Figure 2 shows a plan view of the second tension staple of the invention; and

Figure 3 shows a view in the direction of arrow B in Figure 2.

In all the Figures, the tension staple is shown in exaggerated size to show the details of construction more clearly.

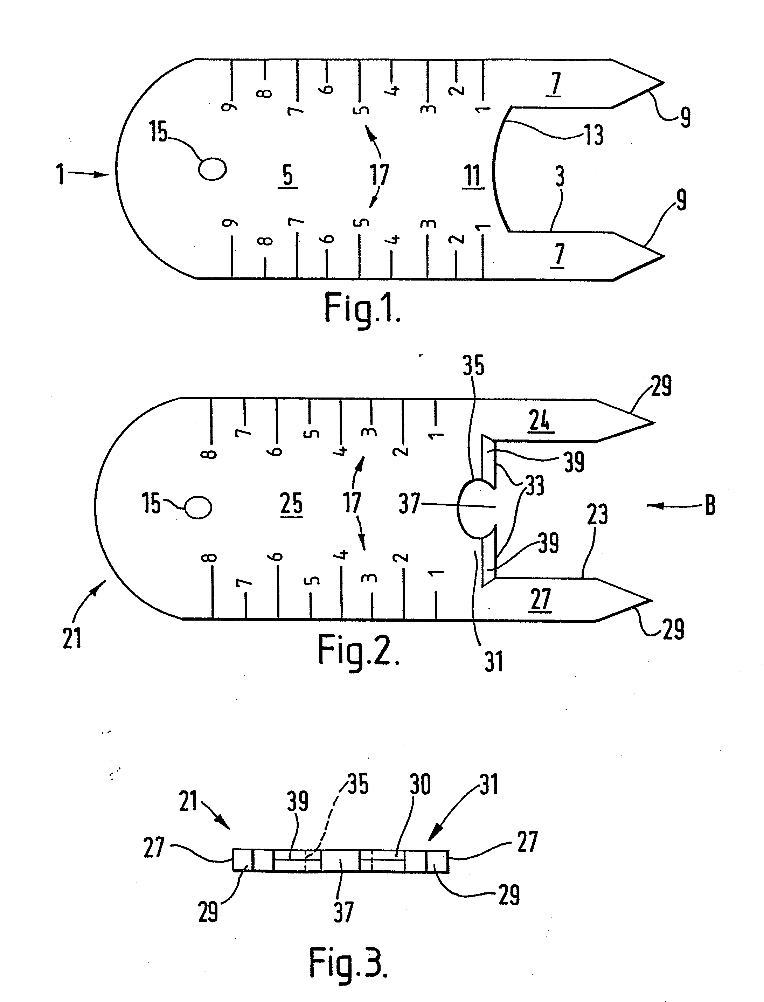

Referring now to Figure 1, the first embodiment of the tension staple comprises a generally rectangular galvanised iron member 1 having a U-shaped portion 3 and a tongue portion 5.

The U-shaped portion 3 comprises a pair of arms 7 which are pointed at their ends 9 and a base portion 11 which has a curved, blunt inside surface 13 remote from the tongue portion 5. The surface 13 may be bevelled.

The tongue portion 5 is approximately twice as long as the arms 7 of the U-shaped portion 3. A hole 15 is provided in the end of the tongue portion 5 remote from the arms 7 for receiving a removal tool. Markings 17 are also provided on the tongue portion 5 for giving an indication of the depth of insertion of the tension staple 1 into a fence post.

The end of the tongue portion 5 remote from the arms 7 is rounded off so that blows from a hammer which are directed off the centre axis of the tension staple 1 will not deform the tension staple, but will drive it into a post.

The tension staple 1 will be used in the erection of a wire as described above. A strand of of wire will be located between the arms 7 and the tension staple 1 driven into a post. As the tension staple 1 is driven into the post so that the tongue portion 5 enters the post, the wire is bent around the surface 13 and driven into the post. It will be appreciated that twice as much wire as tongue portion will be driven into the post. This will cause the wire to become tensioned in addition to being fixed to the post.

A disadvantage with the tension staple 1 is that it can be difficult to drive it a long way into the post, also if it is driven a long way into the post and the wire is not of a very good quality, the wire may be broken.

The tension staple shown in Figures 2 and 3, to which reference is now made, is designed to overcome these difficulties. This second embodiment of the tension staple 21 also comprises a U-shaped portion 23 and a tongue portion 25.

The U-shaped portion 23 comprises a pair of arms 27 which are pointed at their ends 29 and a base portion 31. However, the base portion 31 has a straight inside surface 33 remote from the tongue portion 25.

A generally cylindrical hole 35 intersects the surface 33 thereby making an opening 37 therein. The edges of the hole 35 are preferably bevelled. The portions of the surface 33 on either side of the opening 37 are formed into sharpened edges 39.

The tongue portion 25 is of similar construction to the tongue portion 5 of the first embodiment and is therefore not further described.

The provision of the sharpened edges 39 on the surface 33 of the base portion 31 of the U-shaped portion 23 enables the tension staple 21 to be more easily driven into a post.

A wire to be attached to a post is threaded through the hole 35 prior to driving the tension staple 21 into the post. As the tension staple 21 is driven into the post the sharpened edges open up at least in part a path for the wire, which is therefore not subject to the same forces as it would experience in the first embodiment of the tension staple 1. The wire is therefore significantly less likely to break on tensioning.

The second embodiment of the tension staple 21 is also used in the manner described above to erect a wire fence.

CLAIMS

1.    A tension staple having:

a generally U-shaped portion, for receiving a wire to be tensioned, the end of each arm of the U-shaped portion being pointed, and

a tongue portion extending from the base of the U-shaped portion away from the arms thereof, for insertion into a post with the wire received in the U-shaped portion thereby to draw a portion of the wire into the post whereby the wire is tensioned.

2.    A tension staple according to claim 1, which comprises a generally rectangular member having the U-shaped portion formed in one shorter side thereof.

3.    A tension staple according to claim 3, wherein the other shorter side of the member is rounded.

4.    A tension staple according to any one of claims 1 to 3 wherein the tongue portion is at least as long as the arms of the U-shaped portion.

5.    A tension staple according to claim 4 wherein the tongue portion is between two and three times the length of the arms of the U-shaped portion.

6.    A tension staple according to any one of claims 1 to 5, wherein the surface of the base of the U-shaped portion remote from the tongue portion has a sharpened edge and a hole is provided immediately adjacent the edge for receiving a length of wire.

7.    A tension staple according to claim 6 wherein the hole intersects the edge.

8.    A tension staple according to claim 6 or claim 7, wherein the hole is located in the middle of the edge.

9.    The use of a tension staple according to any one of claims 1 to 8 in erecting a wire fence.

10.    A method of tensioning a wire, for use in erecting a wire fence, which comprises locating the wire in a tension staple having a generally U-shaped portion, the end of each arm of the U-shaped portion being pointed, and a tongue portion extending from the base of the U-shaped portion away from the arms thereof, with the wire received in the U-shaped portion, and driving the tension staple into a post arms-first so that at least a portion of the tongue enters the post thereby drawing a portion of the wire into the post, whereby the wire is tensioned.

Fig.1.

Fig.2.

Fig.3.

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-1 466 533  (KOSIENSKI)<br>* Figure 2 * | 1-4 | F 16 B  15/00 |
| A | | 9,10 | |
| | --- | | |
| Y,A | DE-U-1 796 000  (FA. W. KUWERTZ)<br><br>* Figure 4 * | 1,2,4, 5 | |
| | --- | | |
| Y,A | US-A-2 161 632  (NATTENHEIMER)<br><br>* Figure 5 * | 1-4,6- 8 | |
| | --- | | |
| Y,A | US-A-3 499 359  (YRJANAINEN)<br>* Figure 5 * | 1,4,9 | |
| | --- | | **TECHNICAL FIELDS SEARCHED (Int. Cl. 3)** |
| Y | US-A-3 721 153  (ROSEN)<br><br>* Figure 1 * | 1,4,6- 8 | F 16 B  15/00 |
| | --- | | |
| Y | US-A-2 342 709  (VATET)<br>* Figure 1 * | 7,8 | |
| | --- | | |
| Y | US-A-2 811 073  (KLOPSTOCK)<br>* Figure 2 * | 7,8 | |
| | ----- | | |

The present search report has been drawn up for all claims

| Place of search | Date of completion of the search | | Examiner |
|---|---|---|---|
| BERLIN | 11-04-1984 | ZAPP E | |